# EUROPÄISCHE PATENTSCHRIFT

(11) **EP 2 495 211 B1**
(45) Veröffentlichungstag und Bekanntmachung des Hinweises auf die Patenterteilung: **12.02.2014**
(21) Anmeldenummer: 12001305.7
(22) Anmeldetag: 28.02.2012
(51) Int. Cl.: B66F 9/075, B60R 21/02, B66F 17/00

(54) **Rückhaltesystem für einen Fahrer eines Fahrzeugs**
Retention system for a driver of a vehicle
Système de retenue pour un conducteur de véhicule

(30) Priorität: 02.03.2011 DE 202011003440 U
(43) Veröffentlichungstag der Anmeldung: 05.09.2012
(73) Patentinhaber: HSM Hans Sauermann GmbH & Co. KG, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-B1- 1 145 919
- AU-A1- 2004 202 634
- DE-A1- 19 615 591
- GB-A- 2 144 323
- US-A1- 2004 099 461

## Beschreibung

Die Erfindung betrifft ein Rückhaltesystem für einen Fahrer eines Fahrzeugs, insbesondere eines Flurförderfahrzeugs gemäß dem Oberbegriff des Patentanspruchs 1.

Aus der EP 1 145 919 B1 ist ein gattungsgemäßes Rückhaltesystem für einen Fahrer eines Flurförderfahrzeugs bekannt. Dieses Flurförderfahrzeug weist eine Kabine auf. Um den Fahrer bei Unfällen zu schützen, ist am Flurförderfahrzeug ein Lagerbock vorgesehen, an dem ein Schutzbügel verschwenkbar abgestützt ist. Die Schwenkachse ist dabei horizontal und quer zum Fahrzeug ausgerichtet. Dieser Schutzbügel ist zwischen einer den Fahrer in der Kabine haltenden Rückhaltestellung und einer ein Ein- und Aussteigen ermöglichende Freigabestellung verschwenkbar. Dieses Rückhaltesystem hat sich in der Praxis gut bewährt und bildet den Ausgangspunkt der vorliegenden Erfindung.

Der Erfindung liegt die Aufgabe zugrunde, ein Rückhaltesystem der eingangs genannten Art zu schaffen, welches bei einfachem Aufbau leicht an unterschiedliche Kabinenformen angepasst werden kann.

Diese Aufgabe wird erfindungsgemäß mit den Merkmalen des Patentanspruchs 1 gelöst.

Das Rückhaltesystem gemäß Anspruch 1 dient für einen Fahrer eines Fahrzeugs, insbesondere eines Flurförderfahrzeugs. Dieses Fahrzeug weist eine Kabine auf. Um den Fahrer bei Unfällen des Fahrzeugs vor schweren Verletzungen zu schützen, ist ein Rückhaltesystem vorgesehen. Dieses weist einen Schutzbügel auf, der an einem Lagerbock abgestützt ist. Der Schutzbügel ist um eine in etwa horizontale Schwenkachse zwischen einer den Fahrer in der Kabine haltenden Rückhaltstellunq und einer ein Ein- und Aussteigen ermöglichenden Freigabestellung um diese Schwenkachse verschwenkbar. Grundsätzlich sollte der Schutzbügel in der Rückhaltestellung derart ausgerichtet sein, dass der Fahrer weder unter dem Schutzbügel hindurchrutscht, noch über diesen hinwegfallen kann. In der Freigabestellung sollte der Schutzbügel derart stehen, dass der Fahrer in keiner Weise behindert wird. Außerdem sollte die Freigabestellung so bemessen sein, dass der Schutzbügel in keiner Weise an der Kabine anschlägt.

Da die Kabinen unterschiedlicher Fahrzeuge unterschiedlich ausgebildet sind, lassen sich diese Bedingungen in der Regel nicht universell von einem einzigen Rückhaltesystem erfüllen. Zur Lösung dieses Problems ist der Schutzbügel in einem Lagerbock abgestützt, der wenigstens zweischalig ausgebildet ist. Die Schalen des Lagerbocks sind gegeneinander um die Schwenkachse des Schutzbügels verschwenkbar. Damit kann die Ausrichtung des Schutzbügels relativ zur Fahrzeugkabine einjustiert werden, ohne das eine zusätzliche Schwenkachse erforderlich wäre. Dies führt zu einer kurzen Baulänge des Rückhaltesystems und damit zu kurzen und folglich günstigen Hebelarmen. Insbesondere kann die Schwenkachse sehr nah an der Kabinensäule angebracht werden, was die Stabilität des Rückhaltesystems verbessert.

Ein besonders einfacher Aufbau des Rückhaltesystems ergibt sich gemäß Anspruch 2, indem die Schalen durch mindestens einen Arretierbolzen gegeneinander arretierbar sind. Dieser Arretierbolzen wird nach erfolgter Justierung des Schutzbügels festgezogen, so dass der Schwenkbereich des Schutzbügels, insbesondere die Winkellage in der Rückhalte- und Freigabestellung definiert ist. Um den Schutzbügel in der Rückhaltestellung zu halten, wird ein Schloss eingesetzt. Normalerweise müsste dieses Schloss entsprechend der Justierung des Schutzbügels nachgestellt werden. Durch die doppelte Nutzung des Arretierbolzens als Schlossbolzen ist jedoch sichergestellt, dass mit dem Schutzbügel auch das Schloss korrekt justiert ist. Da ein gesonderter Schlossbolzen entfällt, ergibt sich ein besonders einfacher Aufbau.

Im einfachsten Fall ist das Schloss gemäß Anspruch 3 im Schutzbügel gehalten. Damit macht das Schloss die Schwenkbewegung des Schutzbügels beim Justieren mit und ist damit stets korrekt auf den Arretierbolzen ausgerichtet.

Um den Schutzbügel in die Freigabestellung verschwenken zu können, gleichzeitig jedoch ein unbeabsichtigtes Verschwenken in die Freigabestellung zu verhindern, ist es gemäß Anspruch 4 günstig, wenn im Schutzbügel mindestens eine Handhabe vorgesehen ist. Diese Handhabe steht mit dem Schloss in entriegelnder Wirkverbindung. Damit kann das Schloss in sehr einfacher und gleichzeitig ergonomischer Weise entriegelt werden, um den Schutzbügel in die Freigabestellung zu verschwenken.

Der,Arretierbolzen durchsetzt gemäß Anspruch 5 mindestens ein nierenförmiges Langloch mindestens einer der Schalen des Lagerbocks. Dies gewährleistet einen großen Verstellweg des Schutzbügels beim Justieren. Gleichzeitig bleibt der Lagerbock mechanisch stabil und der Arretierbolzen besitzt eine hinreichend große Auflagefläche auf dem Lagerbock.

Im einfachsten Fall ist der Schutzbügel gemäß Anspruch 6 von einem nach unten offenen U-Profil gebildet. Damit ergibt sich eine hinreichend hohe Biegesteifigkeit des Schutzbügels. Außerdem können die erforderlichen Einbauten problemlos von der offenen, unteren Seite erfolgen. Insbesondere ist keinerlei Öffnung für das Schloss erforderlich, wenn dieses im Schutzbügel montiert ist.

Für den Lagerbock haben sich gemäß Anspruch 7 mindestens ein nach oben offenes U-förmiges Profil bzw. mindestens zwei abgewinkelte Profile bewährt. Beide Varianten ergeben für den Lagerbock eine ausreichende Stabilität, um Drehmomente aufzunehmen, die vom Fahrer über den Schutzbügel auf den Lagerbock übertragen werden.

Um den Schutzbügel in die Freigabestellung zu verschwenken, ist aufgrund der einseitigen Lagerbelastung eine erhebliche Kraft erforderlich. Dies ist insbesondere deshalb problematisch, weil der Fahrer den Schutzbügel in der Nähe der Freigabestellung nur schlecht ergreifen kann. Aus diesem Grund ist es günstiger, wenn zwischen dem Schutzbügel und dem Lagerbock gemäß Anspruch 8 mindestens eine Feder angreift. Diese Feder drückt den Schutzbügel selbsttätig in die Freigabestellung. Zur Überführung des Schutzbügels in die Rückhaltestellung muss dieser lediglich vom Fahrer gegen die Kraft der Feder nach unten gedrückt werden. Dies ist ergonomisch einfacher und damit problemlos durchführbar. Als Feder hat sich insbesondere eine Gasfeder bewährt, wobei alternativ auch Druck-, Zug- und Drehfedern möglich sind.

Zur Begrenzung des Schwenkbereichs des Schutzbügels ist es gemäß Anspruch 9 günstig, wenn im Lagerbock mindestens ein Anschlagbolzen vorgesehen ist. Dieser Anschlagbolzen verhindert ein Anschlagen des Schutzbügels an der Kabine.

Schließlich ist es gemäß Anspruch 10 vorteilhaft, wenn der Arretier- bzw. Anschlagbolzen als Stabilisierungselement des Lagerbocks ausgebildet ist. Dieser Bolzen verleiht dem Lagerbock die erforderliche Quersteifigkeit, um Drehmomente vom Schutzbügel wirksam abzustützen.

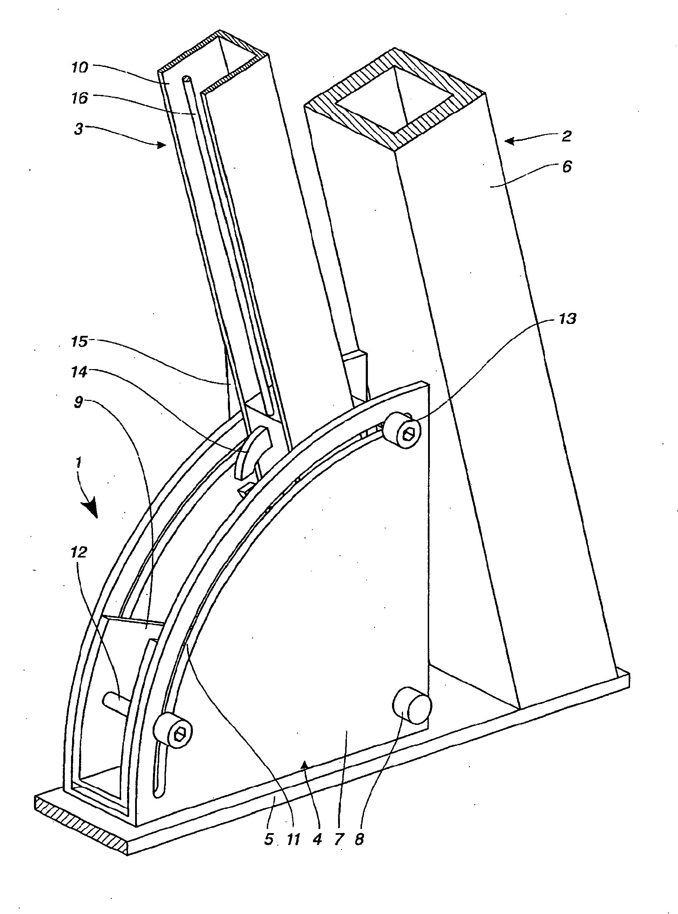

Der Steuerungsgegenstand wird beispielhaft anhand der Zeichnung erläutert, ohne den Schutzumfang zu beschränken.

Die einzige Figur zeigt eine räumliche Darstellung eines Ausschnitts eines Fahrzeugs 1 mit einer angedeuteten Kabine 2. Am Fahrzeug 1 ist ein Rückhaltesystem 3 abgestützt. Dieses Rückhaltesystem 3 weist einen Lagerbock 4 auf, der am Fahrzeug 1 festgelegt ist. Dabei kann der Lagerbock 4 - wie dargestellt - an einem Fahrzeugboden 5 festgelegt sein. Alternativ ist aber auch daran gedacht, den Lagerbock 4 an einer Säule 6 der Kabine 2 zu montieren. Welche Montageart eingesetzt wird, hängt von unterschiedlichen Rahmenbedingungen des Fahrzeugs 1 ab. Insbesondere spielen die Neigung der Säule 6 sowie die Stabilität des Fahrzeugbodens 5 eine erhebliche Rolle für diese Entscheidung.

Der Lagerbock 4 weist eine äußere U-förmige Schale 7 auf, welche mittels nicht dargestellter Haltemittel mit dem Fahrzeugboden 5 verbunden ist. Diese äußere Schale 7 weist eine Schwenkachse 8 auf, um die eine U-förmige innere Schale 9 schwenkbar abgestützt ist. Die Verschwenkbarkeit der inneren Schale 9 relativ zur äußeren Schale 7 dient zum Justieren eines Schutzbügels 10 des Rückhaltesystems 3 in seiner Winkellage.

Die äußere Schale 7 weist beidseitig nierenförmige Langlöcher 11 auf. Diese Langlöscher 11 sind von einem Arretierbolzen 12 und einem Anschlagbolzen 13 durchsetzt. Mit Hilfe des Arretierbolzens 12 wird die innere Schale 9 in ihrer Schwenklage an der äußeren Schale 7 festgelegt. Dies ist unmittelbar nach dem Justiervorqang durchzuführen. Der Anschlagbolzen 13 bildet einen oberen Endanschlag für den Schutzbügel 10, so dass dieser nicht gegen die Säule 6 stößt. Der Arretierbolzen 12 und der Anschlagbolzen 13 verleihen dem Lagerbock 4 die erforderliche Quersteifigkeit, um Drehmomente, die vom Schutzbügel 10 eingebracht werden, in das Fahrzeug 1 einzuleiten.

Der Schutzbügel 10 ist um die Schwenkachse 8 relativ zur inneren Schale 9 des Lagerbocks 4 verschwenkbar. Diese Verschwenkbarkeit dient der Überführung des Schutzbügels 10 von einer horizontal ausgerichteten Rückhaltestellung in eine nach oben verschwenkte Freigabestellung. Durch die Verschwenkung des Schutzbügels 10 um die gleiche Schwenkachse 8, um die auch die innere Schale 9 des Lagerbocks 4 verschwenkt wird, ergibt sich ein besonders einfacher und stabiler Aufbau. Außerdem kann auf diese Weise der Lagerbock 7 relativ nahe an die Säule 6 herangerückt werden.

Der Schutzbügel 10 ist im Wesentlichen U-förmig ausgebildet, wobei die freie Öffnung nach unten zeigt. Im Schutzbügel 10 ist ein Schloss 14 vorgesehen, welches mit dem Arretierbolzen 12 zusammenwirkt. Dieses Schloss 14 kann den Schutzbügel 10 in einer im Wesentlichen horizontalen Rückhaltestellung arretieren, um auf diese Weise den Fahrer zu schützen.

Am Lagerbock 4 ist außerdem eine Feder 15 in Form einer Gasfeder abgestützt, die mit dem Schutzbügel 10 in Wirkverbindung steht. Diese Feder 15 sorgt für ein selbsttätiges Überführen des Schutzbügels 10 in die Freigabestellung, wenn das Schloss 14 freigegeben ist. Um das Schloss 14 einfach entriegeln zu können, ist im Schutzbügel 10 eine nicht dargestellte Handhabe vorgesehen, die über ein Stellmittel 16, vorzugsweise in Form eines Seiles oder Bowdenzuges, mit dem Schloss 14 verbunden ist.

Insbesondere in Fällen, in denen der Fahrzeugboden 5 als Motor- oder Batteriehaube ausgebildet ist, kann es erforderlich sein, diesen aufzuklappen. Damit das Rückhaltesystem 3 nicht gegen die Kabine 2 stößt, ist es abnehmbar am Fahrzeugboden 5 gehalten. Alternativ kann das Rückhaltesystem auch um eine Längsachse in Richtung der Fahrzeugaußenseite schwenkbar sein. In jedem Fall ist eine ausreichend sichere Arretierung vorgesehen, damit das Rückhaltesystem 3 den angreifenden Drehmomenten widerstehen kann.

### Bezugszeichenliste

- 1: Fahrzeug
- 2: Kabine
- 3: Rückhaltesystem
- 4: Lagerbock
- 5: Fahrzeugboden
- 6: Säule
- 7: äußere Schale
- 8: Schwenkachse
- 9: innere Schale
- 10: Schutzbügel
- 11: Langloch
- 12: Arretierbolzen
- 13: Anschlagbolzen
- 14: Schloss
- 15: Feder
- 16: Stellmittel

## Patentansprüche

1. Rückhaltesystem für einen Fahrer eines Fahrzeugs (1), insbesondere eines Flurförderfahrzeugs, welches mindestens eine Kabine (2) anfweist, wobei das Rückhaltesystem (3) mindestens einen am Fahrzeug (1) gehaltenen Lagerbock (4) aufweist, an dem mindestens ein Schutzbügel (10) abgestützt ist, der um eine in etwa horizontale Schwenkachse (8) zwischen einer den Fahrer in der Kabine (2) haltenden Rückhaltestellung und einer ein Ein- und Aussteigen ermöglichenden Freigabestellung verschwenkbar ist, **dadurch gekennzeichnet, dass** der Lagerbock (4) mindestens zwei gegeneinander um die Schwenkachse (8) verschwenkbare Schalen (7, 9) aufweist, von denen eine erste Schale (7) mit dem Fahrzeug (1) und eine zweite Schale (9) mit dem Schutzbügel (10) verbunden ist, um die Lage des Schutzbügels (10) relativ zur Kabine (2) in der Rückhaltestellung anzupassen.

2. Rückhaltesystem nach Anspruch 1, **dadurch gekennzeichnet, dass** die Schalen (7, 9) durch mindestens einen Arretierbolzen (12) gegeneinander arretierbar sind, der mit mindestens einem Schloss (14) in Wirkverbindung steht.

3. Rückhaltesystem nach Anspruch 2, **dadurch gekennzeichnet, dass** das Schloss (14) im Schutzbügel (10) gehalten ist.

4. Rückhaltesystem nach Anspruch 2 oder 3, **dadurch gekennzeichnet, dass** im Schutzbügel (10) mindestens eine Handhabe vorgesehen ist, die mit dem Schloss (10) in entriegelnder Wirkverbindung steht.

5. Rückhaltesystem nach mindestens einem der Ansprüche 1 bis 4, **dadurch gekennzeichnet, dass** der Arretierbolzen (12) ein nierenförmiges Langloch (11) mindestens einer der Schalen (7) durchsetzt.

6. Rückhaltesystem nach mindestens einem der Ansprüche 1 bis 5, **dadurch gekennzeichnet, dass** der Schutzbügel (10) von einem unten offenen U-Profil gebildet ist.

7. Rückhaltesystem nach einem der Ansprüche 1 bis 6, **dadurch gekennzeichnet, dass** der Lagerbock (4) von mindestens einem oben offenen U-Profil und/oder mindestens zwei abgewinkelten Profilen gebildet ist.

8. Rückhaltesystem nach mindestens einem der Ansprüche 1 bis 7, **dadurch gekennzeichnet, dass** zwischen dem Schutzbügel (10) und dem Lagerbock (4) mindestens eine Feder (15) angreift.

9. Rückhaltesystem nach mindestens einem der Ansprüche 1 bis 8, dadurch gekenntzeichnet, dass im Lagerbock (4) mindestens ein Anschlagbolzen (13) zur Begrenzung des Schwenkwinkels des Schutzbügels (10) in der Freigabestellung vorgesehen ist.

10. Rückhaltesystem nach mindestens einem der Ansprüche 1 bis 6, **dadurch gekennzeichnet, dass** der Arretierbolzen (12) und/oder Anschlagbolzen (13) als Stabilisierungselement des Lagerbocks (4) ausgebildet ist.

## Claims

1. Retention system for a driver of a vehicle (1), in particular of an industrial vehicle which has at least one cab (2), wherein the retention system (3) has at least one bearing block (4) which is held on the vehicle (1) and on which at least one protective bracket (10) is supported, said protective bracket being pivotable about an approximately horizontal pivot axis (8) between a retention position holding the driver in the cab (2) and a release position enabling entry and exit, **characterized in that** the bearing block (4) has at least two shells (7, 9) which are pivotable in relation to each other about the pivot axis (8) and of which a first shell (7) is connected to the vehicle (1) and a second shell (9) is connected to the protective bracket (10) in order to adapt the position of the protective bracket (10) relative to the cab (2) in the retention position.

2. Retention system according to Claim 1, **characterized in that** the shells (7, 9) are lockable relative to each other by at least one locking bolt (12) which is operatively connected to at least one lock (14).

3. Retention system according to Claim 2, **characterized in that** the lock (14) is held in the protective bracket (10).

4. Retention system according to Claim 2 or 3, **characterized in that** at least one handle which is operatively connected to the lock (14) for unlocking purposes is provided in the protective bracket (10).

5. Retention system according to at least one of Claims 1 to 4, **characterized in that** the locking bolt (12) passes through a kidney-shaped elongated hole (11) in at least one of the shells (7).

6. Retention system according to at least one of Claims 1 to 5, **characterized in that** the protective bracket (10) is formed by a U profile which is open at the bottom.

7. Retention system according to one of Claims 1 to 6, **characterized in that** the bearing block (4) is formed by at least one U profile which is open at the Lop and/or by aL least two angled profiles.

8. Retention system according to at least one of Claims 1 two 7, **characterized in that** at least one spring (15) acts between the protective bracket (10) and the bearing block (4).

9. Retention system according to at least one of Claims 1 to 8, **characterized in that** at least one stop bolt (13) for limiting the pivoting angle of the protective bracket (10) in the release position is provided in the bearing block (4).

10. Retention system according to at least one of Claims 1 to 6, **characterized in that** the locking bolt (12) and/or stop bolt (13) is designed as a stabilizing element of the bearing block (4).

## Revendications

1. Système de retenue pour un conducteur d'un véhicule (1), en particulier d'un chariot de manutention, qui présente au moins une cabine (2), le système de retenue (3) présentant au moins un bloc-palier (4) maintenu sur le véhicule (1), sur lequel est supporté au moins un arceau de protection (10), lequel peut pivoter autour d'un axe de pivotement approximativement horizontal (8) entre une position de retenue retenant le conducteur dans la cabine (2) et une position de libération permettant d'entrer et de sortir, **caractérisé en ce que** le bloc-palier (4) présente au moins deux coques (7, 9) pouvant pivoter l'une par rapport à l'autre autour de l'axe de pivotement (8), dont une première coque (7) est connectée au véhicule (1) et une deuxième coque (9) est connectée à l'arceau de protection (10), afin d'adapter la position de l'arceau de protection (10) par rapport à la cabine (2) dans la position de retenue.

2. Système de retenue selon la revendication 1, **caractérisé en ce que** les coques (7, 9) peuvent être bloquées l'une par rapport à l'autre par au moins un boulon de blocage (12) qui est en liaison fonctionnelle avec au moins une serrure (14).

3. Système de retenue selon la revendication 2, **caractérisé en ce que** la serrure (14) est maintenue dans l'arceau de protection (10).

4. Système de retenue selon la revendication 2 ou 3, **caractérisé en ce qu'**au moins une manette est prévue dans l'arceau de protection (10), laquelle est en liaison fonctionnelle de déverrouillage avec la serrure (14).

5. Système de retenue selon au moins l'une quelconque des revendications 1 à 4, **caractérisé en ce que** le boulon de blocage (12) traverse un trou oblong en forme de haricot (11) d'au moins l'une des coques (7).

6. Système de retenue selon au moins l'une quelconque des revendications 1 à 5, **caractérisé en ce que** l'arceau de protection (10) est formé par un profilé en forme de U ouvert vers le bas.

7. Système de retenue selon l'une quelconque des revendications 1 à 6, **caractérisé en ce que** le bloc-palier (4) est formé par au moins un profilé en forme de U ouvert vers le haut et/ou par au moins deux profilés coudés.

8. Système de retenue selon au moins l'une quelconque des revendications 1 à 7, **caractérisé en ce qu'**entre l'arceau de protection (10) et le bloc-palier (4) s'engage au moins un ressort (15).

9. Système de retenue selon au moins l'une quelconque des revendications 1 à 8, **caractérisé en ce que** dans le bloc-palier (4) est prévu au moins un boulon de butée (13) pour limiter l'angle de pivotement de l'arceau de protection (10) dans la position de libération.

10. Système de retenue selon au moins l'une quelconque des revendications 1 à 6, **caractérisé en ce que** le boulon de blocage (12) et/ou le boulon de butée (13) sont réalisés sous forme d'élément de stabilisation du bloc-palier (4).
